# EUROPEAN PATENT APPLICATION

(11) **EP 3 745 292 A1**
(43) Date of publication of application: **02.12.2020**
(21) Application number: 19856424.7
(22) Date of filing: 08.05.2019
(51) Int. Cl.: G06F 21/62, G06F 16/955, H04L 29/06

(54) **HIDDEN LINK DETECTION METHOD AND APPARATUS FOR WEBSITE**

(30) Priority: 16.04.2019 CN 201910305415
(71) Applicant: Wangsu Science & Technology Co., Ltd., Shanghai 200030 (CN)
(72) Inventor: The designation of the inventor has not yet been filed
(74) Representative: Vinsome, Rex Martin
(86) International application number: PCT/CN2019/086057
(87) International publication number: WO 2020/211130

(57) **Abstract**

The present disclosure discloses a method and an apparatus for detecting a hidden link in a website, and involves in the field of computer technologies. The method includes: periodically obtaining, for each target URL of a target website, all URL association tags and all attribute content of the URL association tag from a response page of the target URL (101);detecting ,for each of the URL association tags, whether a URL corresponding to attribute content of the URL association tag is in a preset security URL set (102); detecting, if the URL is not in the preset security URL set, whether the attribute content of the URL association tag includes a preset hidden link attribute feature (103); and determining, if the attribute content includes the preset hidden link attribute feature, that the URL corresponding to the attribute content of the URL association tag is a hidden link (104). According to the present disclosure, it can be detected more accurately whether a hidden link is inserted into a website, to reduce a false positive rate and a false negative rate of a hidden link detection device.

## Description

### CROSS-REFERENCE TO RELATED APPLICATIONS

This application is based on Chinese Patent Application No. 201910305415.2, filed on April 16, 2019 and entitled "METHOD AND APPARATUS FOR DETECTING HIDDEN LINK IN WEBSITE", which is incorporated herein by reference in its entirety.

### TECHNICAL FIELD

The present disclosure relates to the field of computer technologies, and in particular, to a method and an apparatus for detecting a hidden link to a website.

### BACKGROUND

With development of Internet technologies, it is popular in marketing to obtain economic benefits from network traffic of a website. To this end, website links of some websites are even hid in other normal websites by using a form in which the links are invisible to an online visitor but searchable by a search engine (which is commonly known as hidden link insertion), to obtain a large amount of network traffic. However, resources of the normal website are undoubtedly occupied, causing economic losses to the normal website to some extent. In addition, if a website of a hidden link is used to spread illegal content, reputation of the normal website is also destroyed, and even an organization or an individual to which the normal website encounters legal accountability. Therefore, for the normal website, a hidden link detection device is generally used to detect whether a hidden link is inserted into the website, to prevent the hidden link from affecting the website.

An existing technology such as website URL comparison or sensitive keyword detection (such as gambling or pornography) is usually used to detect whether a hidden link is inserted into a website. The website URL comparison may be as follows. A hidden link detection device compares all URLs in a website that are obtained using a crawler technology with a preset website URL whitelist respectively. If a URL is not in the website URL whitelist, it may be determined that a hidden link is inserted into a website. The sensitive keyword detection may be as follows. The URLs of the website are requested to be accessed, and matching is performed between content of a response page and a sensitive keyword library preset on a detection apparatus, and if the content of the response page includes content in the sensitive keyword library, it may be determined that a hidden link is inserted into the website.

During implementation of the present disclosure, the inventor finds that at least the following problems exist in the existing technology.

The website URL whitelist in the existing technology may not probably include all URLs of a website, and therefore a URL of the website may be mistakenly determined as a hidden link during detection, resulting in a relatively high false positive rate. Furthermore, the sensitive keyword library preset in the detection apparatus may not include all sensitive keywords, and some sensitive keywords may not be detected, resulting in a relatively high false negative rate.

### SUMMARY

In order to overcome the problems in the existing technology, embodiments of the present disclosure provide a method and an apparatus for detecting a hidden link in a website. The technical solutions are as follows.

According to a first aspect, a method for detecting a hidden link in a website is provided, the method including:
obtaining, for each target URL of a target website, all URL association tags and all attribute content of the URL association tags from a response page of the target URL periodically;
detecting, for each URL association tag, whether a URL corresponding to attribute content of the URL association tag is in a preset security URL set;
if the URL is not in the preset security URL set, detecting whether the attribute content of the URL association tag includes a preset hidden link attribute feature; and
if the attribute content includes the preset hidden link attribute feature, determining that the URL corresponding to the attribute content of the URL association tag is a hidden link.

Optionally, before obtaining, for each target URL of a target website, all URL association tags and all attribute content of the URL association tags from a response page of the target URL periodically, the method further includes:
initiating an access request to a home page of the target website, and determining, as the target URLs, all URLs in the home page that include a domain name of the target website; and
successively initiating an access request to each target URL, and adding, to the target URLs, all URLs in a response page of each target URL that include the domain name of the target website.

Optionally, the step of detecting whether a URL corresponding to the attribute content of the URL association tag is in a preset security URL set includes:
detecting whether the URL corresponding to the attribute content of the URL association tag is in a catalog of the target website, or whether URL domain name information in the attribute content of the URL association tag is in a preset domain name whitelist.

Optionally, the step of detecting whether the attribute content of the URL association tag includes a preset hidden link attribute feature includes:
detecting whether tag information in the attribute content of the URL association tag is tag meta, or whether the attribute content of the URL association tag is in a preset html hidden link library.

Optionally, after detecting whether the attribute content of the URL association tag includes a preset hidden link attribute feature, the method further includes:
if the attribute content does not include the preset hidden link attribute feature, obtaining a multi-layer outer tag of the URL association tag and attribute content of the multi-layer outer tag from the response page of the target URL;
successively detecting whether the attribute content of the multi-layer outer tag includes the preset hidden link attribute feature; and
if it is detected that a target outer layer tag includes the preset hidden link attribute feature, stopping detection and determining that the URL corresponding to the URL association tag is a hidden link.

Optionally, after determining that the URL corresponding to the attribute content of the URL association tag is a hidden link, the method further includes:
extracting a hidden link URL from the attribute content of the URL association tag according to the hidden link attribute feature; and
generating a detection log including the attribute content of the URL association tag, the hidden link URL, and the target URL, and sending the detection log to a website server of the target website.

Optionally, if a hidden link false positive instruction sent by the website server is received, the preset security URL set is updated according to the hidden link URL

According to a second aspect, an apparatus for detecting a hidden link in a website is provided. The apparatus for detecting a hidden link in a website includes a tag obtaining module and a tag detection module.

The tag obtaining module is configured to periodically obtain, for each target URL of a target website, all URL association tags and all attribute content of the URL association tags from a response page of the target URL

The tag detection module is configured to detect, for each URL association tag, whether a URL corresponding to attribute content of the URL association tag is in a preset security URL set.

The tag detection module is further configured to: detect, if the URL is not in the preset security URL set, whether the attribute content of the URL association tag includes a preset hidden link attribute feature; and
The tag detection module is further configured to: determine, if the attribute content includes the preset hidden link attribute feature, that the URL corresponding to the attribute content of the URL association tag is a hidden link.

Optionally, the tag obtaining module is specifically configured to:
initiate an access request to a home page of the target website, and determining, as the target URLs, all URLs in the home page that include a domain name of the target website; and
successively initiate an access request to each target URL, and adding, to the target URLs, all URLs in a response page of each target URL that include the domain name of the target website.

Optionally, the tag detection module is specifically configured to:
detect whether the URL corresponding to the attribute content of the URL association tag is in a catalog of the target website, or whether URL domain name information in the attribute content of the URL association tag is in a preset domain name whitelist.

Optionally, the tag detection module is specifically configured to:
detect whether tag information in the attribute content of the URL association tag is tag meta, or whether the attribute content of the URL association tag is in a preset html hidden link library.

Optionally, the tag detection module is further configured to:
obtain, if the attribute content does not include the preset hidden link attribute feature, a multi-layer outer tag of the URL association tag and attribute content of the multi-layer outer tag from the response page of the target URL;
successively detect whether the attribute content of the multi-layer outer tag includes the preset hidden link attribute feature; and
if it is detected that a target outer layer tag includes the preset hidden link attribute feature, stop detection and determine that the URL corresponding to the URL association tag is a hidden link.

Optionally, the tag detection module is further configured to:
extract a hidden link URL from the attribute content of the URL association tag according to the hidden link attribute feature; and
generate a detection log including the attribute content of the URL association tag, the hidden link URL, and the target URL, and send the detection log to a website server of the target website.

Optionally, the tag detection module is further configured to:
update, if a hidden link false positive instruction sent by the website server is received, the preset security URL set according to the hidden link URL

According to a third aspect, a hidden link detection device is provided. The hidden link detection device includes a processor and a memory for storing at least one instruction, at least one program, a code set, or an instruction set. The at least one instruction, the at least one program, the code set, or the instruction set are loaded and executed by the processor to perform the method for detecting a hidden link in a website described in the first aspect.

According to a fourth aspect, a computer readable storage medium is provided. The storage medium stores at least one instruction, at least one program, a code set, or an instruction set. The at least one instruction, the at least one program, the code set, or the instruction set are loaded and executed by a processor to perform the method for detecting a hidden link in a website described in the first aspect.

Beneficial effects brought by the technical solutions provided in the embodiments of the present disclosure are as follows.

According to the method for detecting a hidden link in a website provided in the embodiments, the URL association tags and attribute content of the URL association tags are periodically obtained from all URL response pages of the target website, and each URL association tag is detected. It is first detected whether the URL corresponding to the attribute content of the URL association tag is in the preset security URL set. For the URL association tag that is not in the preset security URL set, it is then detected whether the attribute content of the URL association tag includes the preset hidden link attribute feature. In this way, each URL association tag is detected from a plurality of perspectives by using the preset security URL set and the preset hidden link attribute feature, so that the website is detected from a plurality of levels, and it can be more accurately detected whether a hidden link is inserted into the website, thereby reducing a false positive rate and a false negative rate of the hidden link detection device.

### BRIEF DESCRIPTION OF THE DRAWINGS

To illustrate the technical solutions according to the embodiments of this application more clearly, the accompanying drawings required for describing the embodiments are introduced below briefly. Apparently, the accompanying drawings in the following descriptions merely show some of the embodiments of this application, and persons of ordinary skill in the art can obtain other drawings according to the accompanying drawings without creative efforts.
Fig. 1 is a schematic flowchart of a method for detecting a hidden link in a website according to an embodiment of the present disclosure;
Fig. 2 is a schematic flowchart of another method for detecting a hidden link in a website according to an embodiment of the present disclosure;
Fig. 3 is a schematic structural diagram of a n apparatus for detecting a hidden link in a website according to an embodiment of the present disclosure; and
Fig. 4 is a schematic structural diagram of a hidden link detection device according to an embodiment of the present disclosure.

### DETAILED DESCRIPTION

To make the objectives, technical solutions, and advantages of this application more comprehensible, the following further describes the embodiments of this application in detail with reference to the accompanying drawings.

Embodiments of the present disclosure provide a method for detecting a hidden link in a website. The method may be performed by a hidden link detection device. The hidden link detection device may be a network device that is disposed by a website provider or a hidden link detection service provider, has a domain name access function and a data processing and analysis function, and is configured to detect whether a hidden link is inserted into a website. When performing hidden link detection on a website, the hidden link detection device may obtain, from any URL of the website, attribute content of a URL association tag in a response page of the URL, and detect whether a hidden link is hidden in the URL association tag by analyzing the attribute content. If no hidden link is detected, any other URL is then detected until a hidden link is detected or all URLs of the website are detected, thereby implementing the hidden link detection of the website. The hidden link detection device may include a processor, a memory, and a transceiver. The processor may be configured to detect a hidden link in a website in the following procedure, the memory may be configured to store required data and generated data during processing, and the transceiver may be configured to receive and send relevant data during processing.

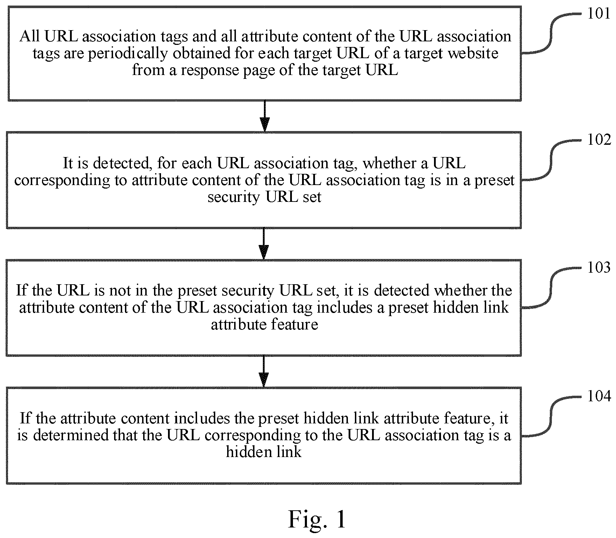

A processing procedure shown in Fig. 1 is described in detail with reference to specific embodiments. Content is as follows.

Step 101: All URL association tags and all attribute content of the URL association tags are periodically obtained for each target URL of a target website from a response page of the target URL

A target website is a website to be detected, and a target URL may be any URL of the target website. A URL association tag may be a tag capable of implementing a URL jump by using attribute content of the tag. The URL association tag may include, but be not limited to, a tag *a,* a tag *meta,* a tag *iframe,* a tag *frame,* a tag *embed,* and a tag *object.* Attribute content of a tag may include attribute content (such as an attribute *href,* an attribute *src,* and an attribute URL) directing to a URL and other attribute content (such as an attribute *style,* an attribute *height,* an attribute *width,* and an attribute *left*)*.* For example, the tag *a* is: <a href="http://www.aaa.com/" name="abc" class="de" style="display: block; ">character</a>. Herein, the attribute *href* is an attribute directing to a URL whose content is http://www.aaa.com/; name, class, and style are other attributes with content respectively corresponding to abc, de, and display: block.

In an embodiment, when a website provider periodically performs hidden link detection on a website by using the foregoing hidden link detection device, each detection may start from any URL of the website. Specifically, a tag and attribute content of the tag in a response page of the website may be obtained. In view of a fact that a hidden link is also a URL that can be used to locate a resource, a hidden link may be inserted by using a URL association tag capable of implementing a URL jump, to be specific, by writing a hidden link URL into attribute content of the URL association tag, and hiding the hidden link using other attribute content of the URL association tag. Therefore, when the tag is being obtained, only all URL association tags capable of implementing a URL jump and attribute content of the URL association tags may be obtained.

Alternatively, the hidden link detection device may obtain URLs of a website by initiating an access request to pages of multiple layer of the website. Correspondingly, processing before step 101 may be as follows: An access request is initiated to a home page of the target website, and all the URLs in the home page that include the domain name of the target website are determined as the target URLs; and an access request is initiated to each target URL successively, and all URLs in the response page of each target URL that include the domain name of the target website is added to the target URLs.

In implementation, when all the URLs of the preset target website are not known, the hidden link detection device may first initiate an access request to the home page of the target website, then determines, as the target URLs, all URLs in the received home page that include a domain name (including a website domain name and a domain sub-name of the website domain name) of the target website, and stores the target URLs into a set of URL to be accessed. Next, the hidden link detection device may successively initiate an access request to each target URL in the set of URL to be accessed, then adds, to the target URLs, all URLs in the received response page that include the domain name (including a website domain name and the domain sub-name of the domain name of the website) of the target website, and stores the added target URLs into the set of URL to be accessed. To be specific, the hidden link detection device may continue to access the newly added target URLs and add new target URLs, which is performed repeatedly until all URLs on the website are obtained. Generally, the same resource of the same website may be accessed from links of different pages of the website. Therefore, when each URL is accessed, many reduplicative URLs are usually obtained. Herein, all the received URLs in the response page may be added to the target URLs after reduplicative URLs are removed. The URLs may be specifically obtained by using a crawler technology. The home page of the website is used as an entrance. Content of the home page is crawled and stored, and then a new page is obtained from any link in the home page, to crawl and store content of the new page, and so on, until all the URLs under the website are crawled. Further, all URLs added after several times of repetition may overlap. Therefore, in order to improve detection efficiency, a number of times (for example, 3-5 times) of repetition may be preset. It is worth mentioning that all URLs obtained by accessing all URLs may also be stored into a subset of URL to be accessed, and then all the URLs in the subset of URL to be accessed are stored into the set of URL to be accessed. In addition, the hidden link detection device may also first initiate an access request to any page of the target website, which is not limited in this embodiment.

Step 102: It is detected, for each URL association tag, whether a URL corresponding to attribute content of the URL association tag is in a preset security URL set.

The preset security URL set may be a set including multiple URLs or multiple types of URLs, and the URLs in the set may include all types of links that are allowed to exist on a page of the target website, such as an internal link or a friendship link of the target website.

During detection of each URL association tag, the URL corresponding to the attribute content of the URL association tag may be detected by detecting attribute content of the URL association tag capable of implementing a URL jump. If the URL corresponding to the attribute content of the URL association tag is in the preset security URL set, it indicates that no hidden link is written in the URL association tag. If the URL corresponding to the attribute content of the URL association tag is not in the preset security URL set, it indicates that a hidden link may be written in the URL association tag and further detection needs to be performed. It is worth mentioning that attributes of different URL association tags capable of implementing a URL jump are also different. For example, an attribute of the tag a capable of implementing a URL jump is the attribute href, an attribute of the tag meta capable of implementing a URL jump is the attribute URL, an attribute of the tag iframe capable of implementing a URL jump is the attribute src, an attribute of the tag frame capable of implementing a URL jump attribute is the attribute src, an attribute of the tag embed capable of implementing a URL jump attribute is the attribute src, and an attribute of the tag object capable of implementing a URL jump is an attribute codebase.

Optionally, URL domain name information in attribute content of a URL association tag may be used to determine whether a corresponding URL is in the preset security URL set. Correspondingly, processing of step 102 may be as follows: It is detected whether the URL corresponding to the attribute content of the URL association tag is in a catalog of the target website, or it is detected whether the URL domain name information in the attribute content of the URL association tag is in a preset domain name whitelist.

In implementation, domain name information may be usually used to distinguish URLs. Therefore, the hidden link detection device may determine whether the URL corresponding to the attribute content of the URL association tag is in the preset security URL set by detecting the URL domain name information in the attribute content of the URL association tag. For attribute content directing to a URL in the URL association tag, a writing manner of the attribute content may vary depending on different pages corresponding to the URLs. If the URL is in a catalog of a currently detected website, the attribute content directing to the URL may not include domain name information, and directly starts with "/", "./" or "../". However, if the URL is not in the catalog of the currently detected website, the attribute content directing to the URL is usually a URL form including a domain name. Therefore, the hidden link detection device may determine whether the URL corresponding to the attribute content of the URL association tag is in the preset secure URL set by detecting whether the URL corresponding to the attribute content of the URL association tag is in the catalog of the target website, or by detecting whether the URL domain name information in the attribute content of the URL association tag is in the preset domain name whitelist. The hidden link detection device may determine that the URL corresponding to the attribute content of the URL association tag is in the preset security URL set if either of the following is met: the attribute content of the URL association tag is in the catalog of the target website or a domain name corresponding to the attribute content of the URL association tag is in the preset domain name whitelist.

Step 103: If the URL is not in the preset security URL set, it is detected whether the attribute content of the URL association tag includes a preset hidden link attribute feature.

A hidden link attribute feature may be an attribute feature that may be used to indicate that a URL association tag is a hidden link, which may be particularly summarized by manually collecting a manner in which a hidden link is hidden.

In implementation, if the URL corresponding to the attribute content of the URL association tag is not in the preset security URL set, it indicates that the URL may be an abnormal link (neither a URL that is in the target website nor a friendship link), and the attribute content of the URL association tag needs to be further detected. Therefore, the hidden link detection device may detect whether a hidden link is inserted into the target website by determining whether all the attribute content of the URL association tag includes the preset hidden link attribute feature. Specifically, the hidden link detection device may determine whether the attribute content of the URL association tag includes the preset hidden link attribute feature by analyzing other attribute content (other than the attribute directing to the URL) of the URL association tag.

Optionally, according to a manner of inserting the hidden link, it may be determined whether the attribute content of the URL association tag includes the preset hidden link attribute feature by using a corresponding detection method. Correspondingly, processing of step 103 may be as follows: It is detected whether tag information in the attribute content of the URL association tag is tag meta, or whether the attribute content of the URL association tag is in a preset html hidden link library.

The html hidden link library may record most of hidden link inserting manners in a current technological level, and may be added with updates with development of technologies.

In implementation, in all the URL association tags, the tag meta is located at a head of a source code of an html webpage for providing meta information about the page, and is a main basis for a search engine to determine content of the webpage. However, the tag *meta* is not displayed on the page. Therefore, an attacker may insert a large number of words and links that are irrelevant to the webpage into the tag, and can implement insertion of a hidden link without using other attribute content to hide the hidden link. In order to make URL association tags other than the tag *meta* not only searchable by a search engine but also invisible to a visitor, a hidden link with a jump function needs to be further hidden after being inserted. In the current technological level, a hidden link is usually inserted by making, using other attribute content, a resource to which the hidden link directs cannot be or is not easily found by an online visitor. Therefore, it may be determined whether the URL association tag in the attribute content is the tag meta, or it may be detected whether the attribute content of the URL association tag matches the preset html hidden link library, so as to detect whether the attribute content of the URL association tag includes the preset hidden link attribute feature. Specifically, the hidden link inserting manner in the html hidden link library may include, but is not limited to, a manner of hiding a hidden link using other attributes of a URL association tag, for example, setting a color of the hidden link to a background color, and setting characters of the hidden link to low pixel, which is specifically written as follows:

```
    <a herf="hidden link URL" style="color:#FFFFFF;">keyword</a>
    <a herf="hidden link URL" style="font-size:1px;">keyword</a>
    <a herf="hidden link URL" style="line-height:lpx;">keyword</a>
```

Step 104: If the attribute content includes the preset hidden link attribute feature, it is determined that the URL corresponding to the URL association tag is a hidden link.

In implementation, if it is detected that the other attribute content of the URL association tag includes the preset hidden link attribute feature by analyzing the other attribute content of the URL association tag, for example, a URL corresponding to the attribute content is not in a URL association tag of the preset security URL set and is just the tag meta, or content of an attribute style of the tag a is just like the foregoing writing form for inserting a hidden link, the hidden link detection device may determine that the attribute content of the URL association tag includes the preset hidden link attribute feature, and then may determine that the URL corresponding to the URL association tag is a hidden link.

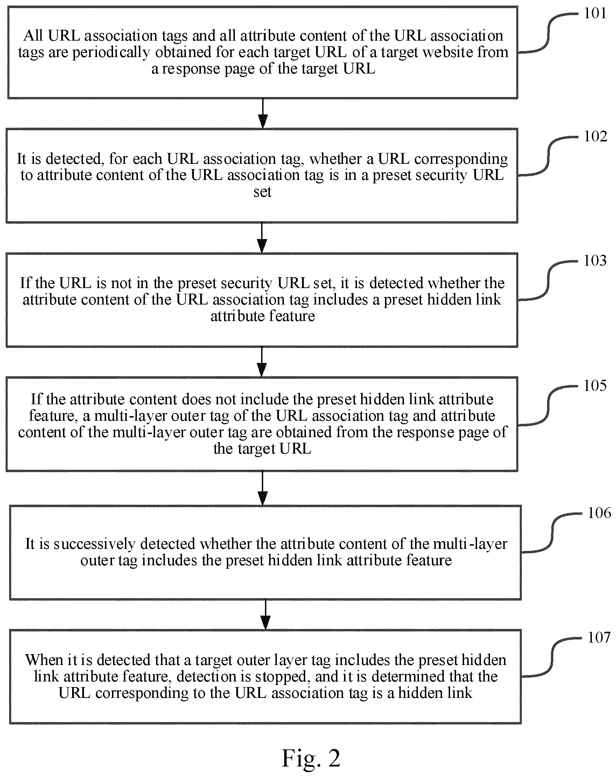

Optionally, if the attribute content of the URL association tag does not include the preset hidden link attribute feature, an outer-layer tag of the URL association tag may be further detected. Correspondingly, as shown in Fig. 2, processing after step 103 may be further as follows.

Step 105: If the attribute content does not include the preset hidden link attribute feature, a multi-layer outer tag of the URL association tag and attribute content of the multi-layer outer tag are obtained from the response page of the target URL

The multi-layer outer tag of the URL association tag may be a multi-layer outer tag of the URL association tag. An outer tag frequently used by hackers to insert a hidden link may include, but is not limited to, a tag *div,* a tag *marquee,* and the like.

In implementation, in addition to the manner of hiding a hidden link using the attribute of the URL association tag, a hidden link may be further hidden using the attribute content of the outer tag of the URL association tag. Therefore, when the hidden link detection device detects the attribute content of the URL association tag, and finds no hidden link attribute feature, the outer tag of the URL association tag may be further detected. For the manner of hiding a hidden link using the attribute content of the outer tag of the URL association tag, in order to enable the link to be retrieved by a search engine, the link is usually hidden using the outer tag of the URL association tag. Therefore, the multi-layer outer tag of the URL association tag and the attribute content of the outer tag may be further obtained from the response page of the target URL

Step 106: It is successively detected whether the attribute content of the multi-layer outer tag includes the preset hidden link attribute feature.

In implementation, the manner of hiding a hidden link using the attribute content of the outer tag of the URL association tag may be either hiding a hidden link using attribute content of a first outer layer tag of the URL association tag or hiding a hidden link using attribute content of an N^{th} (N is a natural number) outer layer tag of the URL association tag. Therefore, the hidden link detection device may sequentially detect, from inside to outside (or from outside to inside), whether the attribute content of the multi-layer outer tag of the URL association tag includes the preset hidden link attribute feature. Further, if a hidden link is hidden using content of the attribute *style* of the tag *div,* position content of "position" in the attribute *style* of the tag *div* may be set to a negative number, so that the hidden link cannot be displayed in a visible page. A specific writing form may be as follows: <div style ="position:absolute;left:-900px;top:-999px;"><a href="hidden link">keyword 2</a></div>. If a hidden link is hidden using attribute content of the tag *marquee,* an attribute *height* (height of a character) of the tag may be set to a very small value, and an attribute *scrollamount* (a speed at which a character scrolls, that is, a flash frequency) of the tag may be set to a very large value, to enable the hidden link to quickly flash in a marquee form when a page is being viewed without affecting viewing of the page. A specific writing form may be as follows: <marquee height=1 width=4 scrollamount=3000scrolldelay=20000><a href= "hidden link URL">keyword</a></marquee>.

It is worth mentioning that the manner of inserting a hidden link is merely used for specific description and facilitating understanding, but does not constitute a limitation on this embodiment.

Step 107: When it is detected that a target outer layer tag includes the preset hidden link attribute feature, detection is stopped, and it is determined that the URL corresponding to the URL association tag is a hidden link.

In implementation, the hidden link detection device sequentially detects, from inside to outside (or from outside to inside), the attribute content of the multi-layer outer tag of the URL association tag until the hidden link attribute feature is detected or until an last outer layer tag of the URL association tag is detected. When detecting the target outer layer, and it is found that the attribute content of the target outer layer tag includes the preset hidden link attribute feature, detection is stopped, and correspondingly, it may be determined that the URL corresponding to the target outer layer tag is a hidden link. In addition, when the hidden link detection device performs layer-by-layer detection on the outer tag of the URL association tag, a total number of layers to be detected may also be set, to improve detection efficiency or reduce missing detection.

Alternatively, after it is determined that the URL corresponding to the attribute content of the URL association tag is a hidden link, or after detection is completed, a detection log may be generated. Corresponding processing may be as follows: A hidden link URL is extracted from the attribute content of the URL association tag according to the hidden link attribute feature; a detection log including the attribute content of the URL association tag, the hidden link URL, and the target URL is generated, and the detection log is sent to a website server of the target website.

In implementation, a URL association tag for which it is detected that a hidden link is hidden in the attribute content thereof may also be referred to a URL association tag which is included in the foregoing html hidden link library. The hidden link detection device may extract the hidden link URL from the attribute content of the URL association tag according to the hidden link attribute feature. In addition, in order to facilitate storage and invocation of a detection result, the hidden link detection device may generate a detection log from a detection result after determining that the URL corresponding to the attribute content of the URL association tag is a hidden link or after completing detection. According to a website provider's requirements, the detection log (especially a detection log in which a hidden link is found) may be further reported as an alarm and sent to the website provider of the target website, so that the website provider learns of the detection result in time and guards against the hidden link. The detection log includes, but is not limited to, the attribute content of the URL association tag, the hidden link URL, and the target URL

Alternatively, the hidden link detection device may optimize and upgrade a hidden link detection mechanism based on feedback of the detection result. Corresponding processing may be as follows: If a hidden link false positive instruction sent by the website server is received, the preset security URL set is updated according to the hidden link URL

In implementation, because the security URL set and the html hidden link library are preset, the hidden link detection device usually does not update and modify the security URL set and the html hidden link library before receiving an update instruction. Therefore, with development of a hidden link technology, it is inevitable that records in the security URL set and the html hidden link library are incomplete, and a detection result cannot avoid being a false positive. The website provider may send a hidden link false positive instruction to the hidden link detection device when finding that the received detection result is a false positive. After receiving the hidden link false positive instruction, the hidden link detection device may automatically add the hidden link URL to the preset security URL set to update the security URL. Then, when the website is being detected next time, matching may not be performed between the target URL association tag that undergoes hidden link false positive and the hidden link library, so that efficiency of detecting the website can also be improved.

According to the method for detecting a hidden link in a website provided in the embodiments, the URL association tags and attribute content of the URL association tags are periodically obtained from response pages of all URLs in the target website, and each URL association tag is detected. It is first detected whether the URL corresponding to the attribute content of the URL association tag is in the preset security URL set. For the URL association tag that is not in the preset security URL set, it is then detected whether the attribute content of the URL association tag includes the preset hidden link attribute feature. In this way, each URL association tag is detected from a plurality of perspectives using the preset security URL set and the preset hidden link attribute feature, so that the website is detected from a plurality of levels, and it can be more accurately detected whether a hidden link is inserted into the website, thereby reducing a false positive rate and a false negative rate of the hidden link detection device.

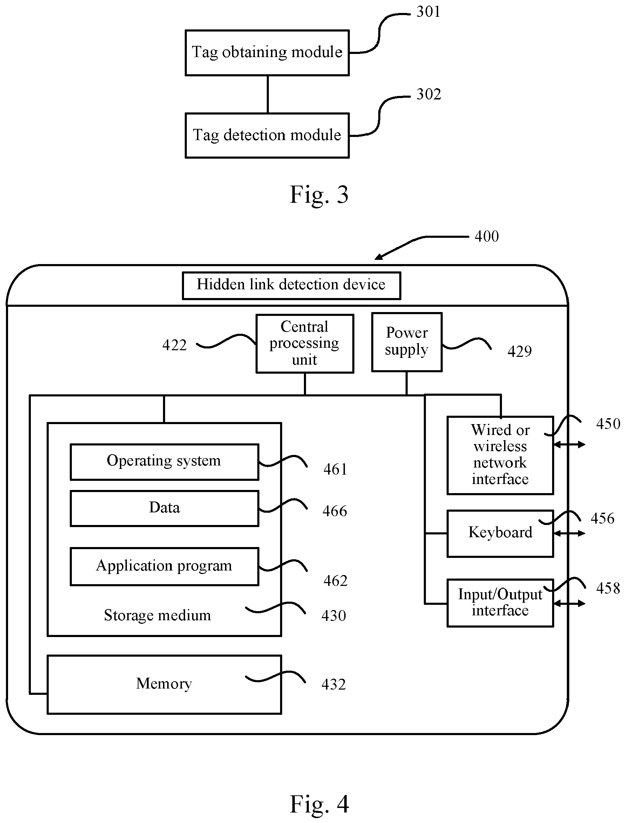

Based on the same technical concept, an embodiment of the present disclosure further provides an apparatus for detecting a hidden link in a website. As shown in Fig. 3, the apparatus for detecting a hidden link in a website includes a tag obtaining module 301 and a tag detection module 302.

The tag obtaining module 301 is configured to periodically obtain, for each target URL of a target website, all URL association tags and all attribute content of the URL association tags from a response page of the target URL

The tag detection module 302 is configured to detect, for each URL association tag, whether a URL corresponding to attribute content of the URL association tag is in a preset security URL set.

The tag detection module 302 is further configured to: detect, when the URL is not in the preset security URL set, whether the attribute content of the URL association tag includes a preset hidden link attribute feature.

The tag detection module 302 is further configured to: determine, when the attribute content includes the preset hidden link attribute feature, that the URL corresponding to the attribute content of the URL association tag is a hidden link.

In one example, the tag obtaining module 301 is specifically configured to:
initiate an access request to a home page of the target website, and determine all URLs in the home page that include a domain name of the target website, as the target URLs; and
successively initiate an access request to each target URL, and add all URLs in a response page of each target URL that include the domain name of the target website to the target URLs.

In one example, the tag detection module 302 is specifically configured to:
detect whether the URL corresponding to the attribute content of the URL association tag is in a catalog of the target website, or whether URL domain name information in the attribute content of the URL association tag is in a preset domain name whitelist.

In one example, the tag detection module 302 is specifically configured to:
detect whether tag information in the attribute content of the URL association tag is tag *meta,* or whether the attribute content of the URL association tag is in a preset html hidden link library.

In one example, the tag detection module 302 is further configured to:
Obtain, when the attribute content does not include the preset hidden link attribute feature, a multi-layer outer tag of the URL association tag and attribute content of the multi-layer outer tag from the response page of the target URL;
successively detect whether the attribute content of the multi-layer outer tag includes the preset hidden link attribute feature; and
when it is detected that a target outer layer tag includes the preset hidden link attribute feature, stop detection and determine that the URL corresponding to the URL association tag is a hidden link.

In one example, the tag detection module 302 is further configured to:
extract a hidden link URL from the attribute content of the URL association tag according to the hidden link attribute feature; and
generate a detection log including the attribute content of the URL association tag, the hidden link URL, and the target URL, and send the detection log to a website server.

In one example, the tag detection module 302 is further configured to:
Update, when a hidden link false positive instruction sent by the website server is received, the preset security URL set according to the hidden link URL

The apparatus for detecting a hidden link in a website provided in this embodiment periodically obtains the URL association tag and the attribute content of the URL association tag from response pages of all URLs in the target website, and detects each URL association tag. The apparatus first detects whether the URL corresponding to attribute content of the URL association tag is in the preset security URL set. For the URL association tag that is not in the preset security URL set, it is then detected whether the attribute content of the URL association tag includes the preset hidden link attribute feature. In this way, each URL association tag is detected from a plurality of perspectives using the preset security URL set and the preset hidden link attribute feature, so that it can be more accurately detected whether a hidden link is inserted into the website, thereby reducing a false positive rate and a false negative rate of the hidden link detection device.

It should be noted that when the apparatus for detecting a hidden link in a website provided by the embodiment detects a hidden link in a website, description is made only through examples of division of the functional modules. In an actual application, the functions may be assigned according to needs to be implemented by different functional modules, that is, the internal structure of the apparatus is divided into different functional modules, so as to implement all or a part of the functions described above. Furthermore, the embodiment of the apparatus for detecting a hidden link in a website provided by the embodiments belongs to the same idea as the embodiment of the method for detecting a hidden link in a website, and the method embodiment may serve as a reference for details of a specific implementation process thereof, which are not repeated herein.

Fig. 4 is a schematic structural diagram of a hidden link detection device according to an embodiment of the present disclosure. The hidden link detection device 400 may vary considerably depending on a configuration or performance, and may include one or more central processing units 422 (for example, one or more processors), a memory 432, and one or more storage media 430 (for example, one or more massive storage devices) storing an application program 462 or data 466. The memory 432 and the storage medium 430 may provide transitory storage or persistent storage. A program stored in the storage medium 430 may include one or more modules (not shown in Fig. 4), each module including a series of instruction operations on the hidden link detection device. Further, the central processing unit 422 may be configured to communicate with the storage medium 430 to perform the series of instruction operations in the storage medium 430 at hidden link detection device 400.

The hidden link detection device 400 may further include one or more power supplies 426, one or more wired or wireless network interfaces 450, one or more input/output interfaces 458, one or more keyboards 456, and/or one or more operating systems 461 such as Windows Server™, Mac OS X™, Unix™, Linux™, and FreeBSD™.

The hidden link detection device 400 may include a memory, one or more programs, the one or more programs being stored in the memory, and being configured to enable one or more processors to execute an instruction included in the one or more programs for performing the foregoing website hidden link detection.

Persons of ordinary skill in the art may understand that all or a part of the steps of the foregoing embodiments may be implemented through hardware, or may be implemented by a program instructing relevant hardware. The program may be stored in a computer readable storage medium. The storage medium may be a read-only memory, a magnetic disk, or an optical disk.

The foregoing descriptions are merely exemplary embodiments of this application, but are not intended to limit this application. Any modifications, equivalent substitutions, and improvements made within the spirit and principle of this application shall fall within the protection scope of this application.

## Claims

1. A method for detecting a hidden link in a website, comprising:
periodically obtaining, for each target URL of a target website, all URL association tags and all attribute content of the URL association tags from a response page of the target URL;
detecting, for each of the URL association tags, whether a URL corresponding to attribute content of the URL association tag is in a preset security URL set;
detecting, if the URL is not in the preset security URL set, whether the attribute content of the URL association tag includes a preset hidden link attribute feature; and
determining, if the attribute content includes the preset hidden link attribute feature, that the URL corresponding to the attribute content of the URL association tag is a hidden link.

2. The method according to claim 1, wherein, before periodically obtaining, for each target URL of a target website, all URL association tags and all attribute content of the URL association tags from a response page of the target URL, the method further comprises:
initiating an access request to a home page of the target website, and determining, as the target URLs, all URLs in the home page that include a domain name of the target website; and
successively initiating an access request to each target URL, and adding, to the target URLs, all URLs in a response page of each target URL that include a domain name of the target website.

3. The method according to claim 1, wherein the step of detecting whether a URL corresponding to the attribute content of the URL association tag is in a preset security URL set comprises:
detecting whether the URL corresponding to the attribute content of the URL association tag is in a catalog of the target website, or whether URL domain name information in the attribute content of the URL association tag is in a preset domain name whitelist.

4. The method according to claim 1, wherein the step of detecting whether the attribute content of the URL association tag includes a preset hidden link attribute feature comprises:
detecting whether tag information in the attribute content of the URL association tag is tag *meta* or whether the attribute content of the URL association tag matches a preset html hidden link library.

5. The method according to claim 1, wherein, after detecting whether the attribute content of the URL association tag includes a preset hidden link attribute feature, the method further comprises:
if the attribute content does not include the preset hidden link attribute feature, obtaining a multi-layer outer tag of the URL association tag and attribute content of the multi-layer outer tag from the response page of the target URL;
successively detecting whether the attribute content of the multi-layer outer tag includes the preset hidden link attribute feature; and
if it is detected that a target outer layer tag includes the preset hidden link attribute feature, stopping detection and determining that the URL corresponding to the URL association tag is a hidden link.

6. The method according to claim 1, wherein, after determining that the URL corresponding to the attribute content of the URL association tag is a hidden link, the method further comprises:
extracting a hidden link URL from the attribute content of the URL association tag according to the hidden link attribute feature; and
generating a detection log including the attribute content of the URL association tag, the hidden link URL, and the target URL, and sending the detection log to a website server of the target website.

7. The method according to claim 6, wherein the method further comprises:
if a hidden link false positive instruction sent by the website server is received, updating the preset security URL set according to the hidden link URL.

8. An apparatus for detecting a hidden link in a website, comprising a tag obtaining module and a tag detection module, wherein
the tag obtaining module is configured to periodically obtain, for each target URL of a target website, all URL association tags and all attribute content of the URL association tags from a response page of the target URL;
the tag detection module is configured to detect, for each URL association tag, whether a URL corresponding to attribute content of the URL association tag is in a preset security URL set;
the tag detection module is further configured to: detect, when the URL is not in the preset security URL set, whether the attribute content of the URL association tag includes a preset hidden link attribute feature; and
the tag detection module is further configured to: determine, when the attribute content includes the preset hidden link attribute feature, that the URL corresponding to the attribute content of the URL association tag is a hidden link.

9. The apparatus for detecting a hidden link in a website according to claim 8, wherein the tag obtaining module is specifically configured to:
initiate an access request to a home page of the target website, and determining, as the target URLs, all URLs in the home page that include a domain name of the target website; and
successively initiate an access request to each target URL, and add, to the target URLs, all URLs in a response page of each target URL that include the domain name of the target website.

10. The apparatus for detecting a hidden link in a website according to claim 8, wherein the tag detection module is specifically configured to:
detect whether the URL corresponding to the attribute content of the URL association tag is in a catalog of the target website, or whether URL domain name information in the attribute content of the URL association tag is in a preset domain name whitelist.

11. The apparatus for detecting a hidden link in a website according to claim 8, wherein the tag detection module is specifically configured to:
detect whether tag information in the attribute content of the URL association tag is tag *meta* or whether the attribute content of the URL association tag matches a preset html hidden link library.

12. The apparatus for detecting a hidden link in a website according to claim 8, wherein the tag detection module is further configured to:
obtain, when the attribute content does not include the preset hidden link attribute feature, a multi-layer outer tag of the URL association tag and attribute content of the multi-layer outer tag from the response page of the target URL;
successively detect whether the attribute content of the multi-layer outer tag includes the preset hidden link attribute feature; and
stop detection and determine that the URL corresponding to the URL association tag is a hidden link, when it is detected that a target outer layer tag includes the preset hidden link attribute feature.

13. The apparatus for detecting a hidden link in a website according to claim 8, wherein the tag detection module is further configured to:
extract a hidden link URL from the attribute content of the URL association tag according to the hidden link attribute feature; and
generate a detection log including the attribute content of the URL association tag, the hidden link URL, and the target URL, and send the detection log to a website server of the target website.

14. The apparatus for detecting a hidden link in a website according to claim 13, wherein the tag detection module is further configured to:
update the preset security URL set according to the hidden link URL when a hidden link false positive instruction sent by the website server is received.

15. A hidden link detection device, comprising a processor and a memory for storing at least one instruction, at least one program, a code set, or an instruction set, wherein the at least one instruction, the at least one program, the code set, or the instruction set are loaded and executed by the processor to perform the method for detecting a hidden link in a website according to any one of claims 1 to 7.

16. A computer readable storage medium for storing at least one instruction, at least one program, a code set, or an instruction set, wherein the at least one instruction, the at least one program, the code set, or the instruction set are loaded and executed by a processor to perform the method for detecting a hidden link in a website according to any one of claims 1 to 7.
